# EUROPÄISCHE PATENTSCHRIFT

(11) **EP 3 488 060 B1**
(45) Veröffentlichungstag und Bekanntmachung des Hinweises auf die Patenterteilung: **22.09.2021**
(21) Anmeldenummer: 17740381.3
(22) Anmeldetag: 17.07.2017
(51) Int. Cl.: E04G 1/20, B66B 9/02, E04G 1/36, F03D 13/20, F03D 13/10

(54) **VERFAHREN ZUR ERRICHTUNG EINES TURMS FÜR EINE WINDENERGIEANLAGE**
METHOD FOR ERECTING A TOWER FOR A WIND ENERGY PLANT
PROCÉDÉ POUR ÉRIGER UNE TOUR POUR UNE ÉOLIENNE

(30) Priorität: 20.07.2016 DE 102016113350
(43) Veröffentlichungstag der Anmeldung: 29.05.2019
(73) Patentinhaber: Wobben Properties GmbH, 26607 Aurich (DE)
(72) Erfinder: BUCK, Ralf, 26736 Krummhörn (DE); KAPITZA, Jan, 26629 Großefehn (DE); MEINECKE, Rene, 26629 Großefehn (DE)
(74) Vertreter: Eisenführ Speiser
(86) Internationale Anmeldenummer: PCT/EP2017/068019
(87) Internationale Veröffentlichungsnummer: WO 2018/015339

(56) Entgegenhaltungen:
- WO-A1-92/18412
- WO-A2-2008/000565
- WO-A2-2011/029515
- DE-A1-102008 055 607
- DE-A1-102009 055 726
- DE-A1-102010 048 547
- DE-A1-102012 109 860
- DE-U1-202010 007 565

## Beschreibung

Die Erfindung betrifft ein Verfahren zur Errichtung eines Turms einer Windenergieanlage.

Türme, wie beispielsweise Fernsehtürme oder Türme von Windenergieanlagen, sind in ihrem Inneren meist mit verschiedenen Turminneneinbauten versehen. Solche Turminneneinbauten können beispielsweise Kabelanordnungen, wie Leistungskabel, Versorgungskabel oder Steuerungskabel, Aufzugsanordnungen, Arbeitsplattformen, Leitern oder Beleuchtungseinheiten umfassen. Verschiedene Lösungen zur Anordnung von Turminneneinbauten wurden vorgeschlagen, beispielsweise in der DE 10 2012 109 860 A1. Nachteilig an existierenden Lösungen ist jedoch unter anderem, dass während der Errichtung des Turms die Turminneneinbauten noch nicht genutzt werden können und/oder deren Anordnung hinderlich ist für die Errichtung und/oder den Betrieb des Turms (beispielsweise den Betrieb einer Windenergieanlage) und/oder auf bestimmte Turmtypen beschränkt sind.

Es ist daher eine Aufgabe der vorliegenden Erfindung, eine Lösung vorzuschlagen, welche einen oder mehrere der genannten Nachteile verringert oder beseitigt. Insbesondere ist es eine Aufgabe der vorliegenden Erfindung, eine Lösung vorzuschlagen, welche eine funktionelle Bereitstellung von Turminneneinbauten während der Errichtung eines Turms ermöglicht.

Das Deutsche Patent- und Markenamt hat in der Prioritätsanmeldung zu vorliegender Anmeldung folgenden Stand der Technik recherchiert: DE 10 2008 055 607 A1, DE 10 2012 109 860 A1, FR 2 468 541 A1, FR 1 417 198 A, WO 92/18 412 A1, WO 2008/000 565 A2, WO 2009/000 060 A1. Weitere Verfahren zur Errichtung von Türmen von Windenergieanlagen mit Versorgungsgerüsten werden in der WO2011/029515, DE102008055607 A1 und der DE102010048547 A1 offenbart.

Diese Aufgabe wird erfindungsgemäß gelöst durch ein Verfahren zur Errichtung eines Turms einer Windenergieanlage nach Anspruch 1.

Beschrieben wird ein Versorgungsgerüst zur Anordnung im Inneren eines Turms, insbesondere im Inneren eines Turms einer Windenergieanlage, mit mehreren übereinander angeordneten und miteinander verbundenen Gerüstmodulen, wobei im Betriebszustand des Versorgungsgerüsts ein erstes Gerüstmodul als Bodenmodul ausgebildet ist, das stehend auf einem Boden, insbesondere einem Boden des Turms oder einer Basisplattform des Turms, angeordnet ist, und wobei ein weiteres Gerüstmodul als Kernmodul ausgebildet ist, das auf dem Bodenmodul angeordnet ist.

Die Erfindung beruht unter anderem auf der Erkenntnis, dass existierende Lösungen die Anbringung von Turminneneinbauten an der Turmwand vorsehen und/oder erst nach vollständiger Errichtung des Turms genutzt werden können, wie beispielsweise ein an einem oberen Ende des Turms aufgehängtes Versorgungsgerüst. Insbesondere Turminneneinbauten wie ein Aufzug können häufig erst genutzt werden, wenn der Turm bereits vollständig oder zumindest zu einem Großteil errichtet ist. Die Erfindung beruht ferner auf der Erkenntnis, dass es vorteilhaft ist, wenn das Versorgungsgerüst und die darin angeordneten Turminneneinbauten bereits während der Errichtung des Turms betriebsbereit sind und insbesondere für die weitere Errichtung des Turms genutzt werden können.

Hierzu ist ein Versorgungsgerüst beschrieben, welches zur Anordnung innerhalb eines inneren eines Turms geeignet ist und mehrere übereinander angeordnete und miteinander verbundene Gerüstmodule aufweist. Ein erstes, vorzugsweise unteres, Gerüstmodul ist dabei als Basismodul ausgebildet, das stehend auf einem Boden angeordnet ist. Das Basismodul kann beispielsweise auf einem Turmfundament angeordnet sein, auf einen Boden, der eine Basisplattform im Inneren des Turms bildet, oder auch auf einer Plattform, welche eine Basis für den weiteren Aufbau des Turms schafft, wie beispielsweise ein im Turmfuß angeordnetes E-Modul.

Ein weiteres Gerüstmodul ist gemäß der Erfindung als Kernmodul ausgebildet und auf dem Bodenmodul angeordnet, insbesondere ebenfalls stehend. Weitere Gerüstmodule, insbesondere als Kernmodule ausgebildete Gerüstmodul, können übereinander auf dem ersten Kernmodul, das auf dem Bodenmodul angeordnet ist, angeordnet werden.

Ein Vorteil der erfindungsgemäßen Lösung ist, dass die stehende Anordnung von mehreren übereinander angeordneten Gerüstmodulen auf einem Boden im Betriebszustand des Versorgungsgerüsts es ermöglicht, dass bereits bei einer minimalen Höhe des Turms (letztlich ab Bereitstellung eines Bodens) ein funktionsfähiges und betriebsbereites Versorgungsgerüst bereitgestellt werden kann, welches unabhängig vom Fertigstellungsgrad, insbesondere unabhängig von einer Höhe, des Turms betrieben wird. Unter Betreiben eines Versorgungsgerüsts wird hier insbesondere dessen Verwendung oder Benutzung zur Versorgung des Turms und/oder Teilen davon und/oder zur Montage des Turms, wie beispielsweise Turminneneinbauten jeglicher Art, verstanden.

Das Versorgungsgerüst ist vorzugsweise im Wesentlichen selbsttragend in dem Sinne, dass das Versorgungsgerüst seine Eigen- und Nutzlast im Wesentlichen durch seine eigene Struktur auf den Boden aufbringen kann. Insbesondere erfordert die erfindungsgemäße Lösung vorzugsweise keine hängende Befestigung des Versorgungsgerüsts. Sofern Befestigungen des Versorgungsgerüsts in (auch) horizontale Richtung vorgesehen sein sollten, tragen diese vorzugsweise lediglich zur seitlichen Stabilisierung des Versorgungsgerüsts, insbesondere bei großer Höhe des Versorgungsgerüsts, bei, dienen jedoch vorzugsweise nicht primär dem Lastabtrag von Eigen- und Nutzlasten des Versorgungsgerüsts.

Insbesondere gegenüber einer verbreiteten Verlegung von beispielsweise Kabeln im Bereich einer beispielsweise an der Turminnenwand vorgesehenen Steigleiter hat das Vorsehen eines Versorgungsgerüsts den Vorteil, dass die Abdeckung von zum Teil wartungsrelevanten Elementen und Einbauten an der Turminnenwand durch Versorgungselemente wie Kabel vermieden werden kann, weil diesen am Versorgungsgerüst nach oben geführt werden können. Auch die Trennung beispielsweise von Leistungskabeln und Versorgungsleitungen ist durch das Versorgungsgerüst leicht möglich. Ferner kann das Versorgungsgerüst die Zugänglichkeit zu verschiedenen Elementen im Turminneren verbessern.

Das Versorgungsgerüst hat insbesondere auch den Vorteil einer einheitlichen Ausgestaltung für eine Vielzahl von Anlagentypen. Unabhängig von beispielsweise Höhe und/oder Verjüngung und/oder Material des Turms (beispielsweise Stahl- oder Betonturm) kann das gleiche Versorgungsgerüst eingesetzt werden, solange ein für das Versorgungsgerüst erforderlicher minimaler Platzbedarf, beispielsweise in Form eines Mindestdurchmessers, vorhanden ist. Das Versorgungsgerüst kann es insbesondere ermöglichen, weitere Turmsegmente hinzuzufügen und den Turm somit aufzubauen, insbesondere durch Aufsetzen neuer Turmsegmente auf das obere Ende des in der Montage befindlichen Turms. Dies kann den Einsatz von an der Turmwandung oder einem Kran angeordneten Plattformen und/oder Hebebühnen überflüssig machen oder zumindest reduzieren. Auch neuere externe Spannverfahren von Betontürmen mit im Turminneren verlaufenden Spannlitzen sind vorteilhaft mit den Versorgungsgerüst einzusetzen, da durch eine Bündelung von Turminneneinbauten und Versorgungselementen am Versorgungsgerüst für mehr Platz für die Anordnung der Spannlitzen vorhanden ist und/oder der Aufwand für deren Anordnung und/oder Verlegung reduziert werden kann. Ferner ist auch mehr Platz für andere, nicht am Versorgungsgerüst anzuordnende Turminneneinbauten und Versorgungselemente vorhanden.

Erfindungsgemäß wird das Versorgungsgerüst während der Errichtung des Turms und unabhängig von einer Höhe des Turms zur Montage des Turms betrieben. Die betriebsbereite Bereitstellung eines hier beschriebenen Versorgungsgerüsts hat unter anderem den Vorteil, dass auch bereits im Montagezustand des Turms eine Versorgung über das Turminnere, nämlich mittels des Versorgungsgerüsts, möglich ist und dadurch, zumindest teilweise, auf die zusätzliche Bereitstellung von Versorgungsmitteln, beispielsweise über einen externen Kran, verzichtet werden kann.

In einer weiteren bevorzugten Ausführungsform ist das Betreiben des Versorgungsgerüstes in verschiedenen Höhen, vorzugsweise durch Hinzufügen weiterer Kernmodule, insbesondere in Anpassung an einen jeweiligen Errichtungszustand des Turms vorgesehen. Die Vorteile einer solchen Ausgestaltung, die auch als "mitwachsen" bezeichnet werden kann, ist unter anderem, dass das Versorgungsgerüst an die jeweilige Höhe des Turms in seinem jeweiligen Montagezustand angepasst werden kann, wodurch insbesondere auch ein jeweils oberes Ende eines Turms vorzugsweise mittels des Versorgungsgerüsts, zumindest teilweise, versorgt werden kann.

Eine bevorzugte Ausgestaltung sieht ferner vor, dass eines oder mehrere Gerüstmodule, vorzugsweise alle Gerüstmodul, eine fachwerkartige Gitterstruktur aufweisen. Eine Ausbildung der Gerüstmodule in Fachwerkstruktur hat unter anderem den Vorteil einer besonders leichten und tragfähigen Konstruktion.

Vorzugsweise haben die Gerüstmodule, insbesondere das Basismodul und/oder die Kernmodule, eine im wesentlichen quader-, würfel-, oder zylinderförmige Grundform. Ferner vorzugsweise weisen die Gerüstmodule, insbesondere das Basismodul und/oder die Kernmodule, eine im Betriebszustand im Wesentlichen vertikal ausgerichtete Längserstreckung und/oder Längsachse auf.

Ferner es bevorzugt, dass das Bodenmodul und/oder eines oder mehrere Kernmodule eine offene Seitenwand aufweist bzw. aufweisen. Als Seitenwand des Bodenmoduls und/oder der Kernmodule wird bzw. werden vorzugsweise die Seitenwand bzw. Seitenwände angesehen, welche im Wesentlichen parallel zur Längserstreckung und oder Längsachse verlaufen. Orthogonal dazu verlaufen in der Regel ein Boden bzw. eine Decke der Gerüstmodule. Die Seitenwände der Gerüstmodule werden vorzugsweise im Wesentlichen durch eine fachwerkartige Gitterstruktur gebildet.

Boden und/oder Decken der Gerüstmodule sind vorzugsweise offen ausgebildet, um ein in im Wesentlichen vertikaler Richtung im Wesentlichen durchgängiges Inneres des Versorgungsgerüsts zu schaffen.

Eine, zumindest teilweise, offene Seitenwand hingegen bezeichnet eine Ausführungsform, bei der die gesamte Seitenwand oder zumindest ein Ausschnitt davon, keine Gitterstruktur aufweist, sondern entweder die gesamte Seitenwand vollständig offen ausgebildet ist oder aber eine Öffnung in der Seitenwand vorgesehen ist, die nicht Teil der fachwerkartigen Gitterstruktur ist, sondern eine Öffnung ohne fachwerkartige Gitterstruktur, d.h. eine Öffnung, welche die fachwerkartige Gitterstruktur unterbricht, darstellt.

In einer weiteren bevorzugten Ausgestaltung ist vorgesehen, dass eines oder mehrere Kernmodule derart ausgebildet sind, dass alle Seitenwände geschlossen sind. Unter einer geschlossenen Seitenwand wird insbesondere eine Seitenwand verstanden, die an allen Seitenwänden eine, im Wesentlichen durchgehende, fachwerkartige Gitterstruktur aufweist.

Bei einer im wesentlichen quaderförmigen Grundform der Gerüstmodule bedeutet eine offene Ausgestaltung eines Gerüstmoduls somit, dass maximal drei Seitenwände geschlossen ausgebildet sind, wohingegen eine geschlossene Ausbildung des Kernmoduls bedeutet, dass alle vier Seitenwände geschlossen ausgebildet sind. Vorzugsweise weist ein Gerüstmodul mehrere offene und mehrere geschlossene Kernmodule auf, wobei ferner vorzugsweise die offenen Kernmodule durch ein oder mehrere geschlossene Kernmodule voneinander beanstandet sind. Das Bodenmodul kann vorzugsweise offen oder geschlossen ausgebildet sein.

Offene Gerüstmodule haben den Vorteil, einen einfachen Zugang in das Innere des Versorgungsgerüsts zu ermöglichen. Die Größe eines Gerüstmoduls entspricht vorzugsweise der Höhe eines Turmsegments oder Turmringabschnitts oder einem Vielfachen davon. Es können jedoch auch mehrere übereinander angeordnete Gerüstmodule zusammen der Höhe eines Turmsegments oder Turmringabschnitts entsprechend.

Insbesondere bei einer geringen Höhe der Gerüstmodule kann es auch bevorzugt sein, zwei oder mehr offen ausgebildete Gerüstmodule übereinander anzuordnen, um eine insgesamt höhere Öffnung im Bereich einer Seitenwand (beispielsweise zwei offene Seitenwände übereinander) zu erzielen.

Ferner weist das Versorgungsgerüst eine Steigleiter auf. Die Steigleiter ist angeordnet und ausgebildet für den Aufstieg von Personen. Die Steigleiter ist derart angeordnet und ausgebildet, dass Personen auf einer Außenseite des Versorgungsgerüsts die Steigleiter auf- bzw. absteigen können. Dies hat insbesondere den Vorteil, da - wie im Folgenden noch detaillierter beschrieben - im Inneren des Versorgungsgerüsts ein Aufzug angeordnet ist.

Das Vorsehen einer Steigleiter am Versorgungsgerüst hat unter anderem den Vorteil, dass - beispielsweise gegenüber einer Steigleitermontage an der Turmwand - eine Kollision mit Spannlitzen und anderen Einbauten an der Turmwand vermieden werden kann. Ferner wird bei sich nach oben verjüngenden Türmen durch die Anordnung der Steigleiter am Versorgungsgerüst anstatt an der Turminnenwand ein nach neueren Normen nicht zulässiger negativer Steigwinkel der Steigleiter vermieden. Insgesamt können durch die Anordnung der Steigleiter am Versorgungsgerüst Zeit und Kosten eingespart werden.

Ferner ist eine Ausgestaltung besonders bevorzugt, bei der eine Seitenwand des Versorgungsgerüsts mit einer fachwerkartigen Gitterstruktur versehen ist, welche die Form einer Steigleiter hat. Dies kann beispielsweise dadurch erfolgen, dass die fachwerkartige Gitterstruktur an der Seitenwand, welche die Steigleiter bilden soll, eine Mehrzahl von horizontalen Sprossen aufweist, wobei diese Sprossen vorzugsweise einen vertikalen Abstand voneinander haben, der für eine Steigleiter für Personen geeignet und/oder zugelassen ist.

Ferner weist das Versorgungsgerüst bevorzugt eine Aufstiegshilfe auf. Die Aufstiegshilfe kann beispielsweise in Form einer Schiene ausgebildet sein, in die ein Gurtelement, welches die aufsteigende Person trägt, eingeklemmt werden kann. Vorzugsweise ist die Aufstiegshilfe ausgebildet, die aufsteigende Person durch Aufbringung einer, zumindest teilweise, nach oben gerichteten Zugkraft den Aufstieg zu erleichtern. Hierzu kann die Aufstiegshilfe vorzugsweise einen Antrieb und/oder verschiedene Kabelanordnungen, wie beispielsweise Versorgungskabel und/oder Sicherheitsseile aufweisen. Der Vorteil der Ausbildung einer Aufstiegshilfe am Versorgungsgerüst ist es, dass beispielsweise ein Antrieb und/oder Kabelanordnungen der Aufstiegshilfe einfach am Versorgungsgerüst angebracht und mitgeführt werden können.

In einer besonders bevorzugten Ausgestaltung ist die Aufstiegshilfe an der Seitenwand des Versorgungsgerüsts angeordnet, welche die fachwerkartige Gitterstruktur aufweist, die die Form einer Steigleiter hat. Besonders bevorzugt ist ferner, dass die Aufstiegshilfe an der Seitenwand an der Steigleiter vorgesehen ist, insbesondere in der Mitte der Steigleiter. Eine solche Anordnung der Aufstiegshilfe kann so vorgesehen sein, dass die Sprossen der Steigleiter mittig durch die Aufstiegshilfe geteilt werden. Eine Anordnung der Aufstiegshilfe an einer als Steigleiter ausgebildeten Seitenwand hatte den Vorteil, dass an der Steigleiter auf zusätzliche Kabelanordnungen für die Aufstiegshilfe verzichtet werden kann, da diese beispielsweise an den übrigen Seitenwänden des Versorgungsgerüsts angebracht sein können.

Das Versorgungsgerüst weist ein Aufzugsmodul auf. Das Vorsehen eines Aufzugsmoduls im Inneren des Versorgungsgerüsts hat den großen Vorteil, dass das Versorgungsgerüst für einen vertikalen Transport von Personen und/oder Lasten, wie beispielsweise Arbeitsmitteln, Werkzeugen etc., genutzt werden kann, insbesondere auch bereits während der Errichtung des Turms, da das Versorgungsgerüst auch im Montagezustand des Turms bereits betriebsfähig ist.

Das Aufzugsmodul ist in einem Inneren des Versorgungsgerüsts, insbesondere in einem Inneren der Gerüstmodule, angeordnet. Auf diese Weise kann eine besonders platzsparende Anordnung realisiert werden.

Ferner ist bevorzugt, dass das Aufzugsmodul derart angeordnet und ausgebildet ist, dass Personen und/oder Lasten mit dem Aufzugsmodul im Inneren der Gerüstmodul befördert werden können. Eine Beförderungsrichtung des Aufzugsmoduls verläuft vorzugsweise in einer im Wesentlichen vertikalen Richtung. Ferner ist bevorzugt, dass das Aufzugsmodul angeordnet und ausgebildet ist, Personen und/oder Lasten in verschiedene Höhen zu befördern.

In einer weiteren bevorzugten Ausgestaltung ist vorgesehen, dass das Versorgungsgerüst, insbesondere das Gerüstmodule, eine Steigvorrichtung aufweist, die mit einem Steigelement des Aufzugsmoduls in Eingriff steht. Besonders bevorzugt ist es, dass das Aufzugsmodul ohne eine vertikal oberhalb des Aufzugsmoduls angeordnete Aufhängung des Aufzugsmoduls auskommt. Vorzugsweise weist das Versorgungsgerüst einen Antrieb auf, der die Steigvorrichtung und/oder das Steigelement antreibt. Der Antrieb kann vorzugsweise am oder im Aufzugsmodul angeordnet sein oder beispielsweise am oder im Basismodul. Diese Anordnungen haben den Vorteil, dass der Antrieb des Aufzugsmoduls unabhängig ist von der Höhe des (mitwachsenden) Versorgungsgerüsts und auch das Aufzugsmodul somit in unterschiedlichen Höhen des (mitwachsenden) Versorgungsgerüsts bzw. in unterschiedlichen Höhen des Turms betriebsbereit ist.

Das Aufzugsmodul hat ferner den Vorteil, dass die üblicherweise für Turmaufzüge erforderlichen Aufhängungen für die Turmaufzüge am oberen Ende des Turms, beispielsweise in Form von Lift- oder Aufzugsbalken, hier nicht erforderlich ist.

Der Antrieb der Steigvorrichtung und/oder des Steigelements versetzt das Aufzugsmodul vorzugsweise in eine im Wesentlichen vertikale Bewegung, um Personen und/oder Lasten zu befördern.

Die Steigvorrichtung umfasst vorzugsweise eine Zahnstange. Das Steigelement ist vorzugsweise als Zahnrad ausgebildet. Diese Ausgestaltung hat den Vorteil, besonders zuverlässig und robust zu sein und ferner einfach in der Höhe verlängert zu sein. Die Zahnstange ist vorzugsweise im Wesentlichen vertikal und ferner vorzugsweise an einer Seitenwand des Versorgungsgerüsts angeordnet. Das Zahnrad steht vorzugsweise mit dieser Zahnstange in Verbindung. Ein vorzugsweise am Aufzugsmodul angeordneter Antrieb setzt beispielsweise das Zahnrad in eine Drehbewegung und über den Eingriff mit der Zahnstange somit das Aufzugsmodul in eine im Wesentlichen vertikale Bewegung.

Eine Längserstreckung des Aufzugsmoduls ist vorzugsweise kleiner oder gleich einer Längserstreckung eines Gerüstmoduls. Vorzugsweise weist das Aufzugsmodul eine Einstiegsöffnung auf, deren Längserstreckung und/oder deren Quererstreckung kleiner oder gleich einer Längserstreckung und/oder einer Quererstreckung einer offenen Seitenwand eines Gerüstmoduls ist. Diese Ausgestaltung hat den Vorteil, dass die offene Seitenwand eines Gerüstmoduls für den Ein- und Ausstieg in das bzw. aus dem Aufzugsmodul genutzt werden kann.

Das Versorgungsgerüst, insbesondere eines oder mehrere Kernmodule und/oder das Basismodul, weist eines oder mehrere erste Befestigungselemente auf zur Befestigung des Versorgungsgerüsts an einer Turminnenwand.

Insbesondere eine Befestigung des Versorgungsgerüsts (zumindest auch) in horizontaler Richtung kann insbesondere mit zunehmender Höhe des Versorgungsgerüsts bevorzugt sein.

Ferner weist das Versorgungsgerüst, insbesondere eines oder mehrere Gerüstmodule, eines oder mehrere zweite Befestigungselemente auf zur Befestigung von Versorgungselementen, wie beispielsweise Kabelanordnungen, an dem Versorgungsgerüst, vorzugsweise an einer Seitenwand. Die zweiten Befestigungselemente sind an einer Außenseite des Versorgungsgerüsts angeordnet. Die zweiten Befestigungselemente sind insbesondere ausgebildet, um Kabel, beispielsweise Einzel- oder Mehrfachkabel, Kabelführungen, Kabelschienen etc. an dem Versorgungsgerüst zu befestigen, insbesondere bei einem im Wesentlichen vertikalen Verlauf der Versorgungselemente.

Eine weitere bevorzugte Ausgestaltung sieht vor, dass das Versorgungsgerüst eine Plattform aufweist, die vorzugsweise verschieblich, insbesondere in im Wesentlichen vertikaler Richtung, an dem Versorgungsgerüst angeordnet ist. Die Plattform erstreckt sich vorzugsweise in einer im Wesentlichen horizontalen Richtung und ferner vorzugsweise im wesentlichen dem Inneren des Versorgungsgerüsts abgewandt, d.h. an Außenseiten der Seitenwände. Ferner vorzugsweise ist eine im Wesentlichen vertikale Führung der Plattform am Versorgungsgerüst vorgesehen, um die Plattform in ihrer Höhe verändern zu können. Ferner vorzugsweise ist eine im Wesentlichen horizontale Erstreckung der Plattform variabel, um die Plattform, insbesondere auch bei veränderlicher Höhe, an unterschiedliche Turminnendurchmesser anpassen zu können.

Ferner wird beschrieben ein Gerüstmodul für ein hierin beschriebenes Versorgungsgerüst, wobei das Gerüstmodul ein Bodenmodul ist, das ausgebildet ist, im Betriebszustand des Versorgungsgerüsts stehend auf einem Boden, insbesondere einem Boden des Turms oder einer Basisplattform des Turms angeordnet zu sein, oder ein Kernmodul ist, das ausgebildet ist, im Betriebszustand des Versorgungsgerüsts auf einem Bodenmodul angeordnet zu sein.

Ferner wird beschrieben ein Turm, insbesondere einen Turm für eine Windenergieanlage, der ein hierin beschriebenes Versorgungsgerüst und/oder ein hierin beschriebenes Gerüstmodul umfasst.

Ferner wird beschrieben eine Windenergieanlage, welche einen hierin beschriebenen Turm und/oder ein hierin beschriebenes Versorgungsgerüst und/oder ein hierin beschriebenes Gerüstmodul umfasst.

Ferner wird beschrieben ein Verfahren zur Errichtung und/oder Betrieb eines Versorgungsgerüsts, insbesondere eines hierin beschriebenen Versorgungsgerüsts, umfassend Anordnen eines als Bodenmodul ausgebildeten Gerüstmoduls stehend auf einem Boden, insbesondere einem Boden des Turms oder einer Basisplattform des Turms, Anordnen eines als Kernmodul ausgebildeten Gerüstmoduls auf dem Bodenmodul, Inbetriebnahme des Versorgungsgerüsts.

Die eingangs genannte Aufgabe wird gelöst durch ein Verfahren zur Errichtung eines Turms für eine Windenergieanlage nach Anspruch 1.

Zu den Vorteilen, Ausführungsvarianten und Ausführungsdetails dieser weiteren Beschreibungen und ihrer jeweiligen Fortbildungen wird auf die vorangegangene Beschreibung zu den entsprechenden Merkmalen des Versorgungsgerüsts verwiesen.

Bevorzugte Ausführungsbeispiele werden beispielhaft anhand der beiliegenden Figuren beschrieben. Es zeigen:
- Figur 1:: eine schematische Darstellung einer Windenergieanlage;
- Figur 2:: eine dreidimensionale Ansicht eines Versorgungsgerüsts;
- Figur 3:: die Anordnung des Versorgungsgerüsts gemäß Figur 2 auf einem Turmfuß;
- Figur 4:: die Anordnung des Versorgungsgerüsts gemäß Figur 2 auf einem auf einem Turmfundament angeordneten E-Modul;
- Figur 5:: eine dreidimensionale Ansicht eines offen ausgebildeten Gerüstmoduls des Versorgungsgerüsts gemäß Figur 2;
- Figur 6:: eine dreidimensionale Ansicht eines geschlossen ausgebildeten Gerüstmoduls des Versorgungsgerüsts gemäß Figur 2;
- Figur 7:: eine dreidimensionale Ansicht eines geschlossen ausgebildeten Gerüstmoduls des Versorgungsgerüsts gemäß Figur 2 mit Kabelanordnungen;

- Figur 8:: ein Detail aus Figur 7 ohne Kabelanordnungen;
- Figur 9:: eine dreidimensionale Ansicht eines Aufzugsmoduls des Versorgungsgerüsts gemäß Figur 2;
- Figur 10:: ein Ausschnitt einer dreidimensionalen Ansicht eines auf einem Turmfuß angeordneten Versorgungsgerüsts mit einer Plattform;
- Figur 11:: eine dreidimensionale Ansicht eines weiteren Versorgungsgerüsts; und
- Figur 12:: eine dreidimensionale Ansicht eines offen ausgebildeten Gerüstmoduls mit einem Aufzugsmodul gemäß Figur 11.

Gleiche oder im Wesentlichen funktionsgleiche oder ähnliche Elemente sind in den Figuren mit den gleichen Bezugszeichen bezeichnet.

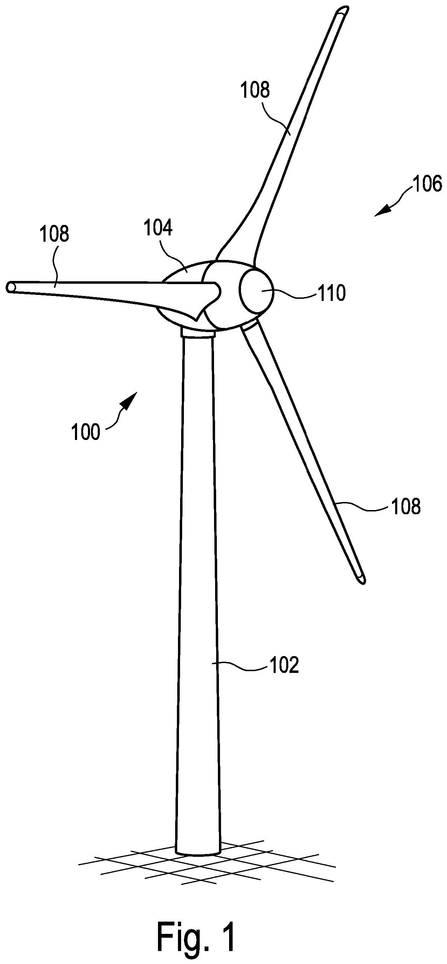

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

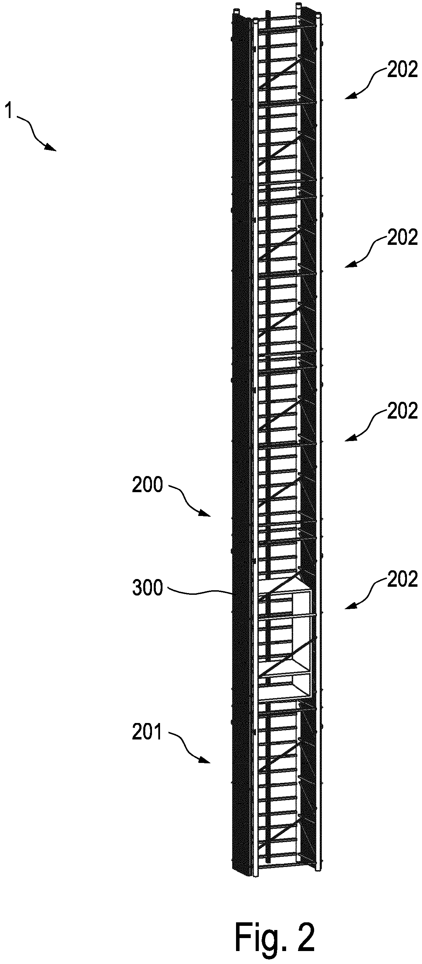

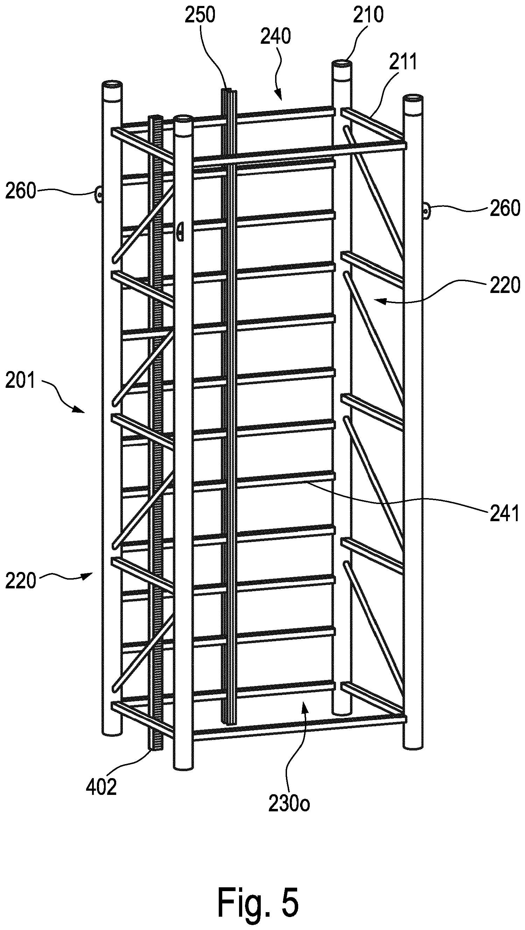

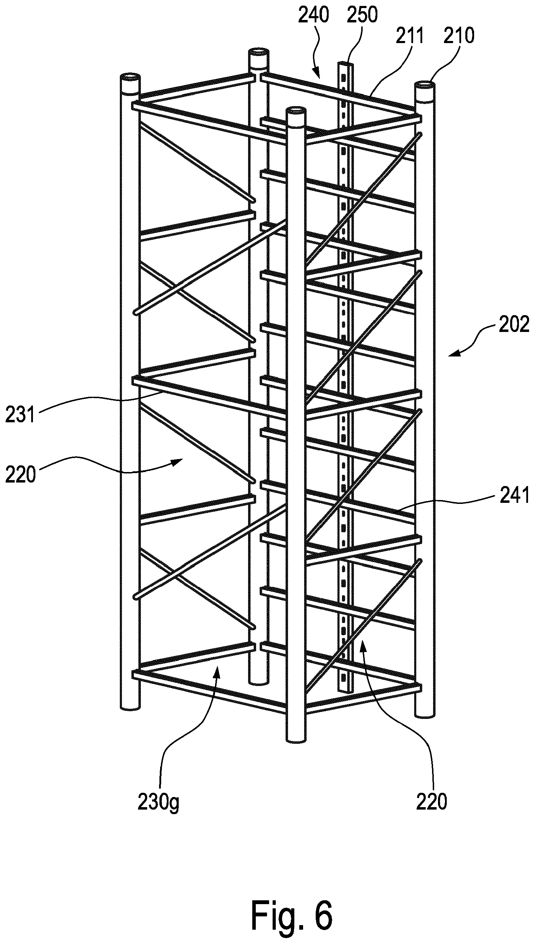

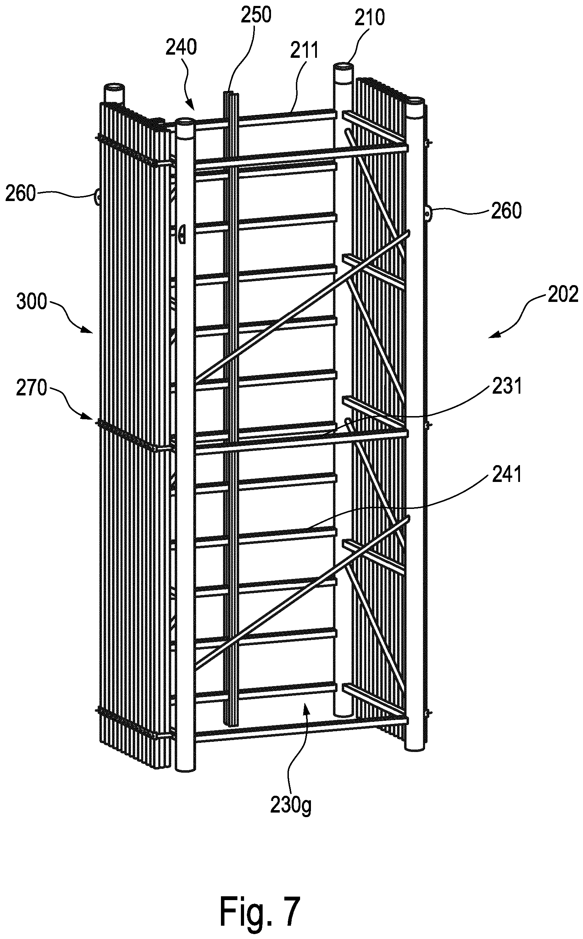

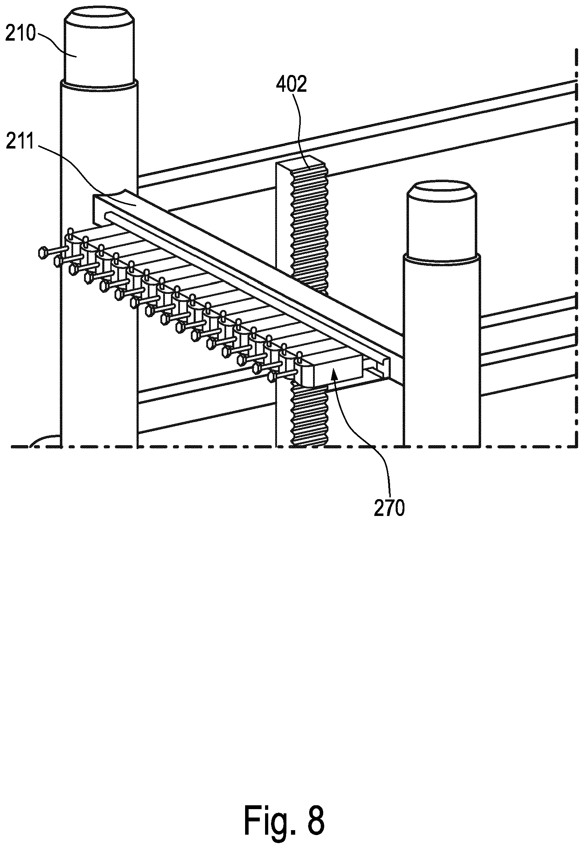

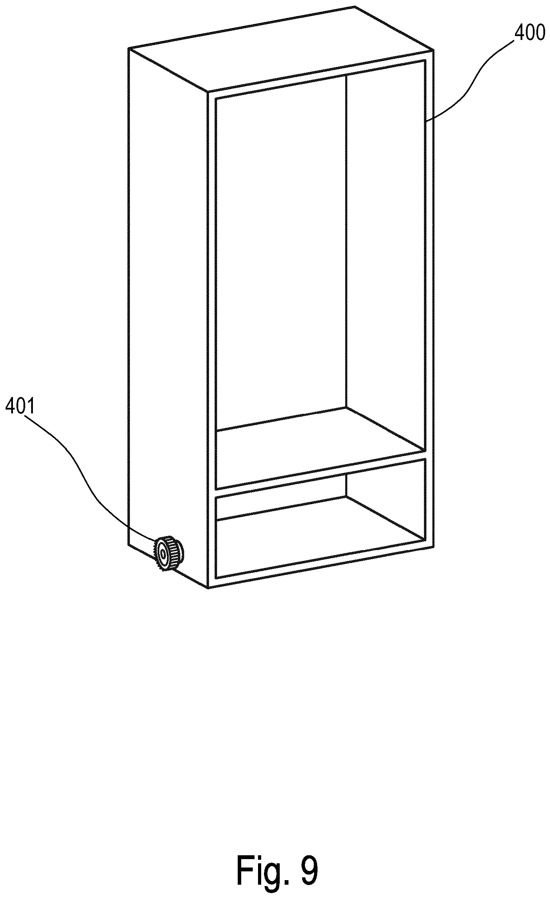

Im Inneren des Turms 102 ist, vorzugsweise auch bereits während der Errichtung des Turms 102, ein in den Figuren 2-12 dargestelltes Versorgungsgerüst 1 angeordnet.

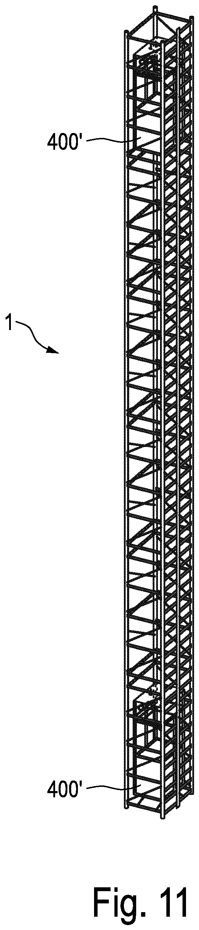

In den Figuren 2-10 ist eine erste beispielhafte Ausführungsform eines Versorgungsgerüsts 1 dargestellt. In den Figuren 11-12 ist eine weitere beispielhafte Ausführungsform eines Versorgungsgerüsts 1 dargestellt, das sich von dem in den Figuren 2-10 dargestellten Versorgungsgerüst 1 im Wesentlichen durch ein anderes Aufzugsmodul unterscheidet. Soweit nicht anders erwähnt, gelten die folgenden Ausführungen für beide Varianten des Versorgungsgerüsts 1.

Das Versorgungsgerüst 1 umfasst mehrere übereinander angeordnete und miteinander verbundene Gerüstmodule 200. Die Gerüstmodule weisen jeweils vier Eckstreben 210 sowie die Eckstreben 210 am oberen und unteren Ende verbindende Querstreben 211 auf. Wie in den Figuren zu erkennen ist, weisen die Gerüstmodul 200 eine fachwerkartige Gitterstruktur auf.

Das erste, untere, Gerüstmodul ist als Basismodul ausgebildet, das stehend auf einem Boden angeordnet ist. Die weiteren Gerüstmodul sind als Kernmodule ausgebildet und auf dem Bodenmodul, ebenfalls stehend, angeordnet.

Die Gerüstmodule 200, insbesondere das Basismodul und/oder die Kernmodule, weisen eine im wesentlichen quaderförmige Grundform mit einer im Betriebszustand im Wesentlichen vertikal ausgerichteten Längserstreckung und/oder Längsachse.

Erste Befestigungselemente 260, die hier an den Eckstreben 210 angeordnet sind, dienen der Befestigung des Versorgungsgerüsts 1 (zumindest teilweise auch) in horizontaler Richtung, nämlich an einer Turminnenwand, und dienen vorzugsweise lediglich einer Lagestabilisierung in im wesentlichen horizontaler Richtung.

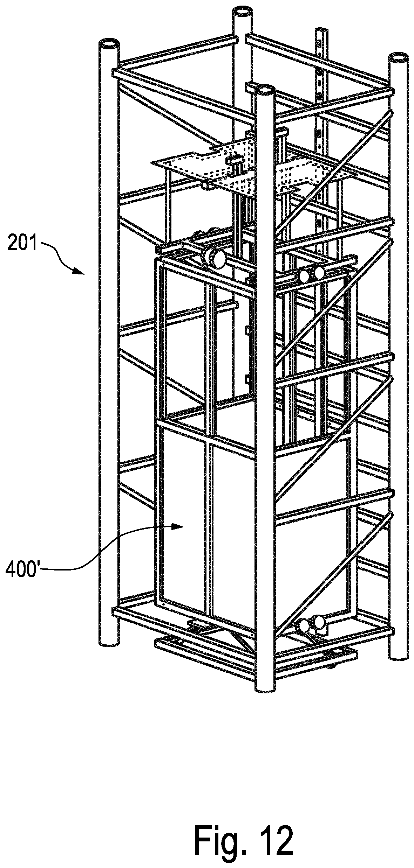

Die Gerüstmodule 200 können als offenes Gerüstmodul 201 oder als geschlossenes Gerüstmodul 202 ausgebildet sein. In den dargestellten Ausführungsbeispielen weisen die offenen Gerüstmodule 201 eine vollständig offene Seitenwand 230o auf. Bei den geschlossenen Gerüstmodulen 202 weist die Seitenwand 230g, die bei den offenen Gerüstmodulen 201 offen ausgebildet ist, eine mittig angeordnete Querstrebe 231 auf und ist somit geschlossen. Wie in den Figuren 11 und 12 zu erkennen ist, dient die offene Seitenwand 230o insbesondere dem Ein- und Ausstieg in ein Aufzugsmodul.

Das in dem Ausführungsbeispiel der Figuren 2-10 dargestellte Aufzugsmodul 400 weist ein als Zahnrad 401 ausgebildetes Steigelement auf, welches im Betriebszustand im Eingriff steht mit einer an der hinteren Seitenwand 240 angeordneten, hier als Zahnstange 402 ausgebildeten Steigvorrichtung. Durch Antrieb, vorzugsweise des Zahnrads 401, kann somit eine im Wesentlichen vertikale Bewegung des Aufzugsmoduls 400 erzielt werden, um Personen und/oder Lasten im Inneren des Versorgungsgerüsts 1 zu befördern. Der Antrieb des Zahnrads 401 kann vorzugsweise am Aufzugsmodul 400 angeordnet sein.

Das in den Figuren 11 und 12 dargestellte Aufzugsmodul 400' dient im Wesentlichen der gleichen Aufgabe wie das in den Figuren 2-10 dargestellte Aufzugsmodul 400. In Figur 11 ist das Aufzugsmodul 400' in zwei unterschiedlichen Positionen (am unteren und oberen Ende des Versorgungsgerüsts 1) dargestellt. Auch das Aufzugsmodul 400' weist vorzugsweise ein Steigelement (nicht dargestellt) auf, welches mit einer Steigvorrichtung (nicht dargestellt) in Eingriff steht, um die im wesentlichen vertikale Bewegung des Aufzugsmoduls 400' zu realisieren.

Die beiden schmalen Seitenwände 220 weisen sowohl in der offenen als auch in der geschlossenen Ausführung der Gerüstmodule 200 eine fachwerkartige Gitterstruktur auf. An den schmalen Seitenwänden 220 angeordnete zweite Befestigungselemente 270 dienen der Aufnahme von Kabelanordnungen 300. Die Funktion und Ausgestaltung der schmalen Seitenwände 220 und der breiten Seitenwände 230o, 230g, 240 können auch vertauscht sein, d.h. eine breite Seitenwand kann zur Anordnung von Kabelanordnungen dienen, während eine der schmalen Seitenwände als Steigleiter ausgebildet sein kann und die andere schmale Seitenwand offen oder geschlossen ausgebildet sein kann. Weitere entsprechende Variationen sind möglich.

Die hintere, breite Seitenwand 240 weist sowohl in der offenen als auch in der geschlossenen Ausführung der Gerüstmodul 200 ebenfalls eine fachwerkartige Gitterstruktur auf, jedoch weist diese Quersterben 241 auf, die einen Sprossenabstand in einer im wesentlichen vertikalen Richtung haben, welche für die Nutzung der Seitenwand 240 als Steigleiter geeignet und/oder zugelassen sind. Die Sprossen 241 werden mittig geteilt von einer Aufstiegshilfe 250, die beispielsweise aus zwei C-Profilen ausgebildet sein kann.

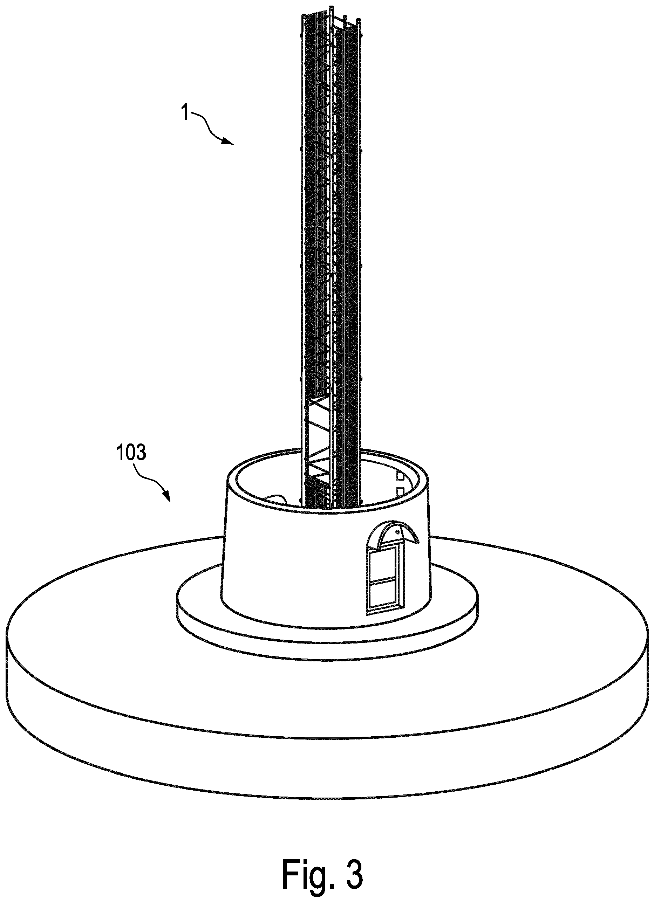

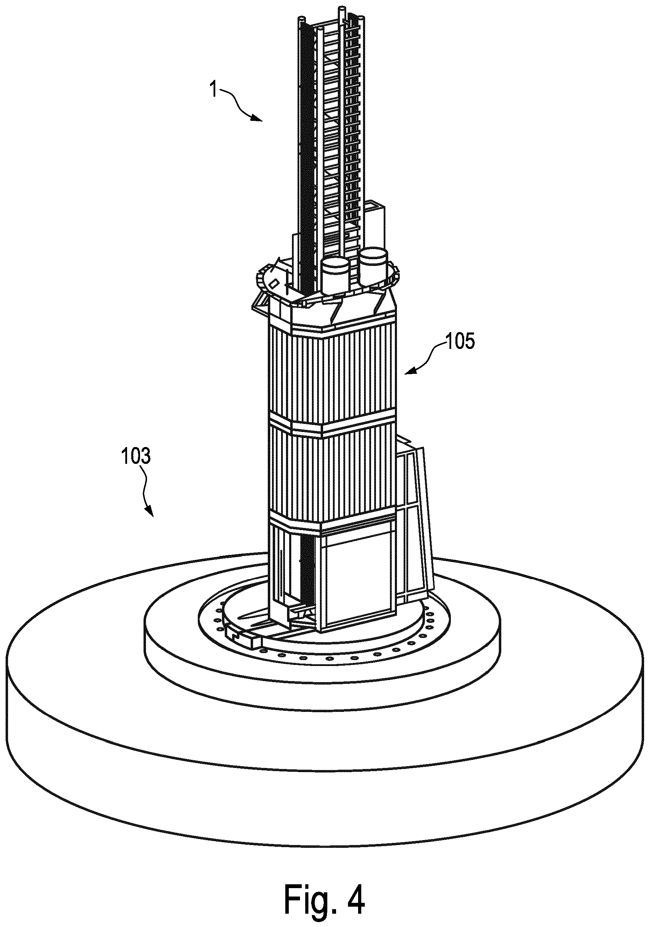

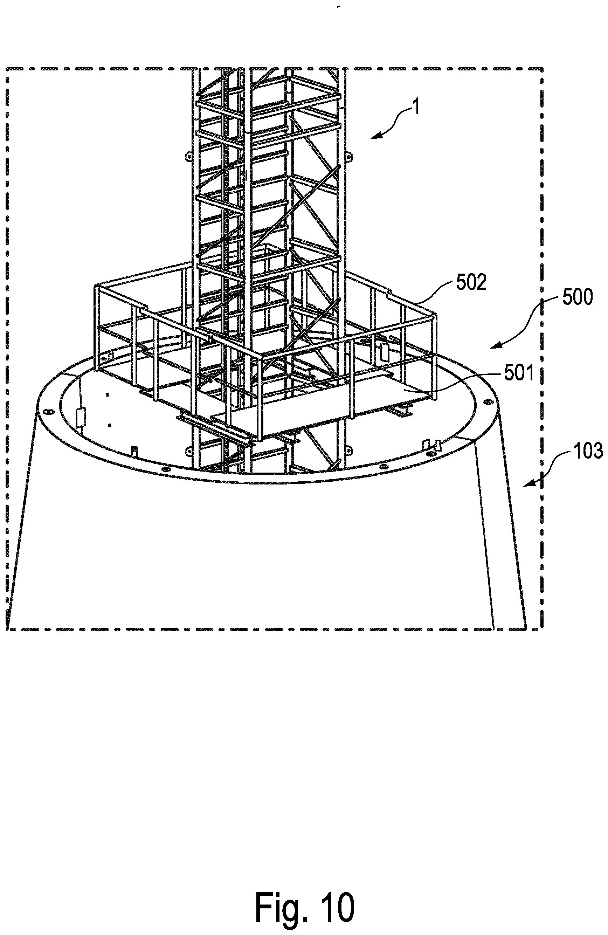

Im Betriebszustand ist das Versorgungsgerüst 1 mit einem ersten Gerüstmodul, das als Bodenmodul ausgebildet ist, stehend auf einem Boden angeordnet. In den Figuren 3 und 10 ist das Versorgungsgerüst 1 auf einem Boden eines Turmfußes 103 angeordnet. In Figur 4 ist auf einem Turmfuß 103 zunächst ein E-Modul angeordnet, welches den Boden bildet, auf dem das Versorgungsgerüst 1 angeordnet ist.

In Figur 10 ist umlaufend an der Außenseite des Versorgungsgerüsts 1 eine Plattform 500 mit einem Boden 501 und einem Geländer 502 angeordnet, welche dem Aufenthalt von Personen und/oder der temporären Lagerung von Arbeitsmitteln und/oder Werkzeugen dienen kann. Vorzugsweise ist die Plattform 500 in im Wesentlichen vertikaler Richtung entlang des Versorgungsgerüsts 1 verschieblich, sodass die Plattform 500 in unterschiedlichen Höhen genutzt werden kann. Ferner vorzugsweise ist eine im Wesentlichen horizontale Erstreckung der Plattform 500 variierbar, sodass die Plattform 500 an unterschiedliche Innendurchmesser eines Turms, beispielsweise bei sich nach oben verjüngenden Türmen, angepasst werden kann.

Das Versorgungsgerüst 1 hat insbesondere den Vorteil, dass durch die stehende Anordnung der Gerüstmodule auf einem Boden eines Turms das Versorgungsgerüst 1 bereits betriebsbereit ist, auch wenn der Turm noch nicht zu voller Höhe errichtet wurde. Auf diese Weise kann das Versorgungsgerüst 1 bereits während der Errichtung des Turms genutzt werden, insbesondere eine als Steigleiter ausgebildete Seitenwand 240 und/oder ein Aufzugsmodul 400,400' und/oder eine Plattform 500. Dies kann das Erfordernis eines externen Krans und/oder von externen Hebebühnen bereits während der Errichtung des Turms deutlich reduzieren oder gar den Einsatz solcher externen Hebemittel ganz oder teilweise überflüssig machen. Ferner erlaubt die kompakte und platzsparende Anordnung des Versorgungsgerüsts mit Versorgungselementen im Inneren des Turms eine einfachere und kostensparende Anordnung von anderen Turminneneinbauten, insbesondere an der Turminnenwand und/oder von externen Spannlitzen.

## Patentansprüche

1. Verfahren zur Errichtung eines Turms (102) für eine Windenergieanlage (100), umfassend:
- Bereitstellen eines Turmfußes (103) mit einem Boden oder einer Basisplattform,
- Errichten und Betreiben eines Versorgungsgerüsts (1) durch
∘ Anordnen eines als Bodenmodul ausgebildeten Gerüstmoduls (200, 201, 202) stehend auf dem Boden des Turms (102) oder der Basisplattform des Turms (102),
∘ Anordnen eines als Kernmodul ausgebildeten Gerüstmoduls (200, 201, 202) auf dem Bodenmodul,
∘ Inbetriebnahme des Versorgungsgerüsts (1),
∘ wobei das Versorgungsgerüst (1) eine Steigleiter (240) und bevorzugt zusätzlich eine Aufstiegshilfe aufweist, wobei die Steigleiter (240) derart angeordnet und ausgebildet ist, dass Personen auf einer Außenseite des Versorgungsgerüsts (1) die Steigleiter (240) auf- bzw. absteigen können, und das Versorgungsgerüst (1) ein Aufzugsmodul (400, 400') aufweist, das in einem Inneren des Versorgungsgerüsts (1) angeordnet ist, ,
- Errichten eines Turms (102) auf dem Turmfuß (103),
- Betreiben des Versorgungsgerüsts (1) während der Errichtung des Turms (102) und unabhängig von einer Höhe des Turms (102) zur Montage des Turms (102),
- Befestigen des Versorgungsgerüsts (1) mittels eines oder mehrerer erster Befestigungselemente (260) an einer Turminnenwand,
- Befestigen von Versorgungselementen an dem Versorgungsgerüst (1) mittels eines oder mehrerer zweiter, an einer Außenseite des Versorgungsgerüsts (1) angeordneter, Befestigungselemente (270).

2. Verfahren nach dem vorhergehenden Anspruch,
umfassend:
- Aufsetzen neuer Turmsegmente auf das obere Ende des in der Montage befindlichen Turms.

3. Verfahren nach mindestens einem der vorhergehenden Ansprüche, umfassend:
- Versorgung, insbesondere eines jeweils oberen Endes des Turms, über das Turminnere, nämlich mittels des Versorgungsgerüsts, bereits im Montagezustand des Turms.

4. Verfahren nach mindestens einem der vorhergehenden Ansprüche, umfassend:
- Betreiben des Versorgungsgerüsts in verschiedenen Höhen, vorzugsweise durch Hinzufügen weiterer Kernmodule, insbesondere in Anpassung an einen jeweiligen Errichtungszustand des Turms.

5. Verfahren nach mindestens einem der vorhergehenden Ansprüche, **dadurch gekennzeichnet, dass** eines oder mehrere Gerüstmodule (200, 201, 202), vorzugsweise alle Gerüstmodule (200, 201, 202), eine fachwerkartige Gitterstruktur aufweisen.

6. Verfahren nach mindestens einem der vorhergehenden Ansprüche, **dadurch gekennzeichnet, dass** das Bodenmodul und/oder eines oder mehrere Kernmodule eine offene Seitenwand (230o) aufweist.

7. Verfahren nach mindestens einem der vorhergehenden Ansprüche, umfassend
- Befördern von Personen und/oder Lasten mit dem Aufzugsmodul (400, 400') im Inneren der Gerüstmodule (200, 201, 202).

8. Verfahren nach mindestens einem der vorhergehenden Ansprüche, **dadurch gekennzeichnet, dass** das Versorgungsgerüst (1), insbesondere die Gerüstmodule (200, 201, 202), eine Steigvorrichtung (402) aufweist, die mit einem Steigelement (401) des Aufzugsmoduls (400, 400') in Eingriff steht.

9. Verfahren nach dem vorhergehenden Anspruch, umfassend
- Antreiben der Steigvorrichtung (402) und/oder des Steigelements (401) mittels eines Antriebs, wobei vorzugsweise der Antrieb am oder im Aufzugsmodul (400, 400') angeordnet ist.

10. Verfahren nach mindestens einem der vorhergehenden Ansprüche, **dadurch gekennzeichnet, dass** das Versorgungsgerüst (1) eine Plattform (500) aufweist, die vorzugsweise verschieblich an dem Versorgungsgerüst (1) angeordnet ist.

## Claims

1. A method for erecting a tower, in particular a tower for a wind power installation, comprising:
- providing a tower foot having a floor or having a base platform,
- erecting and operating a supply scaffold by
• arranging a scaffold module (200, 201, 202) designed as a floor module so as to stand on the floor of the tower (102) or the base platform of the tower (102),
• arranging a scaffold module (200, 201, 202) designed as a core module on the floor module,
• setting the supply scaffold (1) in operation,
• wherein the supply scaffold (1) has a ladder (240) and preferably additionally a climbing aid, wherein the ladder (240) is arranged and configured in such a way that persons on an outside of the supply scaffold (1) can climb up or down the ladder (240), and the supply scaffold (1) has an elevator module (400, 400') arranged in an interior of the supply scaffold (1),
- erecting a tower on the tower foot,
- operating the supply scaffold (1) during construction of the tower (102) and independently of a height of the tower (102) for assembly of the tower (102),
- fastening the supply scaffold (1) to an inner wall of the tower by means of one or more first fastening elements (260),
- fastening supply elements to the supply frame (1) by means of one or more second fastening elements (270) arranged on an outer side of the supply frame (1).

2. Method as claimed in the preceding claim, comprising:
- mounting of new tower segments onto the upper end of the tower being assembled.

3. Method as claimed in at least one of the preceding claims, comprising:
- Supply, in particular of a respective upper end of the tower, via the interior of the tower, namely by means of the supply frame, already in the assembly state of the tower.

4. Method as claimed in at least one of the preceding claims, comprising:
- Operating the supply tower at varying heights, in particular by the addition of further core modules, in particular in a manner adapted to a respective state of the erection of the tower.

5. Method as claimed in at least one of the preceding claims, **characterized in that**
one or more scaffold modules (200, 201, 202), preferably all scaffold modules (200, 201, 202), have a framework-like lattice structure.

6. Method as claimed in at least one of the preceding claims, **characterized in that**
the floor module and/or one or more core modules have/has an open side wall (230o).

7. Method as claimed in at least one of the preceding claims, **characterized in that**
conveying persons and/or loads in the interior of the scaffold modules (200, 201, 202) by means of the elevator module (400, 400').

8. Method as claimed in at least one of the preceding claims, **characterized in that**
the supply scaffold (1), in particular the scaffold modules (200, 201, 202), has a riser device (402), which engages with a riser element (401) of the elevator module (400).

9. Method as claimed in at least one of the preceding claims, **characterized in that**
driving the riser device (402) and/or the riser element (401) by means of a drive, wherein the drive is preferably arranged on or in the elevator module (400, 400').

10. Method as claimed in at least one of the preceding claims, **characterized in that**
the supply scaffold (1) has a platform (500), which is arranged preferably displaceably on the supply scaffold (1).

## Revendications

1. Procédé pour ériger une tour (102) pour une éolienne (100), comprenant :
- la fourniture d'un pied de tour (103) avec un fond ou une plate-forme de base,
- l'érection et le fonctionnement d'une structure d'alimentation (1) en
- - disposant un module de structure (200, 201, 202) réalisé en tant que module de fond à la verticale sur le fond de la tour (102) ou la plate-forme de base de la tour (102),
- - disposant un module de structure (200, 201, 202) réalisé en tant que module central sur le module de fond,
- - mettant en service la structure d'alimentation (1),
- - dans lequel la structure d'alimentation (1) présente une échelle (240) et de manière préférée en supplément un système d'aide à la montée, dans lequel l'échelle (240) est disposée et réalisée de telle manière que des personnes peuvent monter ou descendre l'échelle (240) sur un côté extérieur de la structure d'alimentation (1) et la structure d'alimentation (1) présente un module d'ascenseur (400, 400'), qui est disposé dans un intérieur de la structure d'alimentation (1),
- l'érection d'une tour (102) sur le pied de tour (103),
- le fonctionnement de la structure d'alimentation (1) pendant l'érection de la tour (102) et indépendamment d'une hauteur de la tour (102) pour le montage de la tour (102),
- la fixation de la structure d'alimentation (1) au moyen d'un ou de plusieurs premiers éléments de fixation (260) sur une paroi intérieure de tour,
- la fixation d'éléments d'alimentation sur la structure d'alimentation (1) au moyen d'un ou de plusieurs seconds éléments de fixation (270) disposés sur un côté extérieur de la structure d'alimentation (1) .

2. Procédé selon la revendication précédente, comprenant :
- le placement de nouveaux segments de tour sur l'extrémité supérieure de la tour se trouvant en montage.

3. Procédé selon au moins l'une quelconque des revendications précédentes, comprenant :
- l'alimentation, en particulier d'une extrémité respectivement supérieure de la tour, par l'intermédiaire de l'intérieur de tour, à savoir au moyen de la structure d'alimentation, déjà dans l'état de montage de la tour.

4. Procédé selon au moins l'une quelconque des revendications précédentes, comprenant :
- le fonctionnement de la structure d'alimentation à différentes hauteurs, de préférence en ajoutant des modules centraux supplémentaires, en particulier avec adaptation à un état d'érection respectif de la tour.

5. Procédé selon au moins l'une quelconque des revendications précédentes,
**caractérisé en ce qu'**un ou plusieurs modules de structure (200, 201, 202), de préférence tous les modules de structure (200, 201, 202) présentent une structure grillagée de type treillis.

6. Procédé selon au moins l'une quelconque des revendications précédentes,
**caractérisé en ce que** le module de fond et/ou un ou plusieurs modules centraux présentent une paroi latérale (230o) ouverte.

7. Procédé selon au moins l'une quelconque des revendications précédentes, comprenant
- le transport de personnes et/ou de charges avec le module d'ascenseur (400, 400') dans l'intérieur des modules de structure (200, 201, 202).

8. Procédé selon au moins l'une quelconque des revendications précédentes,
**caractérisé en ce que** la structure d'alimentation (1), en particulier les modules de structure (200, 201, 202), présente un dispositif de montée (402), qui est en prise avec un élément de montée 401) du module d'ascenseur (400, 400').

9. Procédé selon la revendication précédente, comprenant
- l'entraînement du dispositif de montée (402) et/ou de l'élément de montée (401) au moyen d'un entraînement, dans lequel de préférence l'entraînement est disposé sur ou dans le module d'ascenseur (400, 400').

10. Procédé selon au moins l'une quelconque des revendications précédentes,
**caractérisé en ce que** la structure d'alimentation (1) présente une plate-forme (500), qui est disposée de préférence de manière à pouvoir coulisser sur la structure d'alimentation (1).
